# EUROPÄISCHE PATENTSCHRIFT

(11) **EP 2 493 709 B1**
(45) Veröffentlichungstag und Bekanntmachung des Hinweises auf die Patenterteilung: **29.06.2016**
(21) Anmeldenummer: 10767946.6
(22) Anmeldetag: 13.10.2010
(51) Int. Cl.: B60G 3/20, B60G 17/02

(54) **RADAUFHÄNGUNG FÜR KRAFTFAHRZEUGE**
WHEEL MOUNTING ASSEMBLY FOR MOTOR VEHICLES
SUSPENSION POUR VÉHICULES À MOTEUR

(30) Priorität: 30.10.2009 DE 102009051468
(43) Veröffentlichungstag der Anmeldung: 05.09.2012
(73) Patentinhaber: Audi AG, 85045 Ingolstadt (DE)
(72) Erfinder: MEITINGER, Karl-Heinz, 81667 München (DE); OHLETZ, Armin, 85092 Kösching (DE); SCHMIDT, Walter, 86643 Rennertshofen (DE)
(74) Vertreter: Asch, Konrad
(86) Internationale Anmeldenummer: PCT/EP2010/006256
(87) Internationale Veröffentlichungsnummer: WO 2011/050911

(56) Entgegenhaltungen:
- EP-A2- 0 802 075
- DE-A1-102004 001 727
- IE-A1- 20 040 230
- US-A- 5 536 035
- US-A1- 2002 190 492
- US-A1- 2005 051 990
- US-A1- 2005 151 337
- US-A1- 2008 042 391

## Beschreibung

Die Erfindung betrifft ein Kraftfahrzeug mit einer Radaufhängung gemäß dem Oberbegriff des Patentanspruches 1.

Radaufhängungen sind in einer Vielzahl von ausgeführten Konstruktionen bekannt, wobei in der Regel Vorderradaufhängungen und Hinterradaufhängungen unterschiedlich ausgelegt und am Aufbau oder an entsprechend angepassten Hilfsrahmen angelenkt sind. Neben elastokinematischer Maßnahmen zur Verbesserung insbesondere der fahrdynamischen Anforderungen werden zunehmend mechatronische Bauteile eingesetzt, die Fahrzeug Niveaueinstellungen ermöglichen, Nick-und Wankneigungen entgegenwirken, Spur- und Sturzwerte abhängig von fahrdynamischen Parametern korrigieren, etc.

Aus der IE 20 040 230 A1 ist ein Hilfsrahmen-Aufbau bekannt, bei dem die beiden links- und rechtsseitigen Seitenelemente durch zwei Trägerelemente fest miteinander verbunden sind. An den Seitenelementen können definierte Anbauteile festgelegt bzw. angebunden werden.

Aufgabe der Erfindung ist es, ein Kraftfahrzeug mit einer Radaufhängung vorzuschlagen, die unter Verwendung vieler Gleichteile für vordere und hintere Radachsen eines Fahrzeugtyps verwendbar ist und die kinematisch vorteilhaft auf spezifische Anforderungen auslegbar ist.

Diese Aufgabe wird erfindungsgemäß mit den Merkmalen des Patentanspruches 1 gelöst. Vorteilhafte Weiterbildungen der Erfindung sind Gegenstand der Unteransprüche.

Gemäß Anspruch 1 wird vorgeschlagen, dass der Hilfsrahmen als je Radaufhängung autarker Modulrahmen ausgeführt ist, an dem das wenigstens eine Radführungselement mittelbar oder bevorzugt unmittelbar angelenkt, das Federungs- und Dämpfungssystem mittelbar oder unmittelbar sowie wenigstens zum Teil, das heißt weitestgehendst, abgestützt und wenigstens ein Aktuator zur Betätigung des Federungs- und Dämpfungssystems und/oder des Lenksystems und damit zur Einstellung vorgegebener radspezifischer Radführungs- und/oder Lenkparameter mittelbar oder unmittelbar angeordnet sind. Der wenigstens eine Aktuator ist bevorzugt ein mechatronisches Bauteil bzw. ein elektromotorischer Stelltrieb, mittels dem zum Beispiel im steer-bywire-System die Spurführung und ein Lenken gesteuert wird, so dass unter anderem Eigenlenkbewegungen durch Koppelung mit dem zweiten Rad der Achse ausgeschlossen sind; dies gilt in vorteilhafter Weise auch für die Radführungselemente, die nicht wie bei einem gemeinsamen Hilfsrahmen von der jeweils anderen Fahrzeugseite von Störmomenten, Seitenkräften, etc. beeinflusst werden. Über den Lenkaktuator kann bei einer vorderen Radaufhängung eine Lenkbewegung über zum Beispiel 35 Grad Einschlagwinkel und bei einer hinteren Radaufhängung über zum Beispiel 10 Grad Einschlagwinkel gleich- oder gegensinnig gesteuert werden, wobei eine derartige Steuerung im feed-back-Verfahren über ein zentrales, elektronisches Steuergerät erfolgen kann; ferner können beliebige Lenkkorrekturen bei instabilen Fahrzuständen, bei Brems- oder Beschleunigungszuständen, etc. gesteuert werden. Der autarke Modulrahmen ist zudem mit geringerem Montageaufwand in das Kraftfahrzeug verbaubar und ist insgesamt gesehen gewichtsgünstiger als ein durchgehender, beide Radaufhängungen aufnehmender Hilfsrahmen.

In besonders vorteilhafter Weiterbildung kann dem Federungssystem mit einer Tragfeder eine parallel geschaltete und durch einen Aktuator in ihrer Federvorspannung veränderliche Stellfeder zugeordnet sein. Mit dieser Auslegung können mittels der Stellfeder bei geringen Stellkräften eine Niveauverstellung und insbesondere ein Nick- und Wankausgleich realisiert werden; ein bei Radaufhängungen üblicher Querstabilisator kann entfallen.

Der Modulrahmen ist erfindungsgemäß über mehrere passive oder aktive, gummielastische Entkopplungselemente, insbesondere Gummi-Metall-Lager, an dem Aufbau befestigt, wobei die Entkopplungselemente in Fahrzeuglängsrichtung weicher als in Hochrichtung und in Querrichtung ausgelegt sind. Damit wird eine definierte Längsfederung mit erhöhtem Abrollkomfort der Radaufhängung geschaffen, wobei die autarke Aufhängung ein Eigenlenken der Radaufhängung ausschließt.

Des Weiteren kann der Modulrahmen über zwei untere und ein oberes passives oder aktives, gummielastisches Entkopplungselement, insbesondere ein Gummi-Metall-Lager mit dem Aufbau verbunden sein, wobei die Entkopplungselemente bevorzugt im Wesentlichen ein gleichschenkeliges Dreieck mit stabiler Abstützbasis für die Radführung der Radaufhängung bei einer montagegünstigen Anordnung bilden.

In besonders vorteilhafter Weise kann der Modulrahmen mit den Radführungselementen derart symmetrisch ausgeführt sein, dass er beliebig am Fahrzeug verbaut werden kann, zum Beispiel bei gleichen Achskenndaten wie Radsturzverhalten und bei gleichem Radstandswert auf Umschlag linksseitig oder rechtsseitig des Kraftfahrzeuges verbaubar ist. Dies bedeutet, dass für die beiden vorderen und die beiden hinteren, autarken Radaufhängungen ein zumindest weitgehend einheitlicher Modulrahmen mit Radführungselementen, Federungs- und Dämpfungssystem und spurführendem Lenker mit Lenkaktuator verwendbar ist. Aufgrund der fehlenden, mechanischen Verbindung der Lenker über ein herkömmliches Lenkgetriebe ist lediglich steuerungstechnisch zu beachten, dass der Lenker zum Beispiel rechtsseitig hinten und linksseitig vorne am Lenkarm des jeweiligen Radträgers angelenkt ist. Es kann aber unter Verzicht auf einige Gleichteile ein spiegelbildlich gleicher Radträger verwendet sein, so dass bei entsprechend unterschiedlicher Anordnung des Lenkers mit Lenkaktuator am Modulrahmen (zweite spiegelbildliche Befestigungsstelle) beide Lenker hinter oder vor der Lenkachse der Radträger positioniert sein können.

Der Modulrahmen kann zur Erzielung einer gewichtsgünstigen und stabilen Konstruktion mit einem äußeren Rahmen und dazwischen liegenden Streben ausgeführt und aus Leichtmetall im Guss- oder Schmiedeverfahren hergestellt sein.

Das untere und/oder das obere Radführungselement können bevorzugt in der Draufsicht gesehen symmetrische Querlenker sein, deren Schwenkachse im wesentlichen horizontal und parallel zur Längsmittelachse des Kraftfahrzeuges ausgerichtet ist, wobei ferner die durch die Anlenkung des Radträgers an den Querlenkern über Kugelgelenke gebildete Lenkachse im Wesentlichen lotrecht verläuft. In der Grundauslegung (Konstruktionslage) sind damit bei einer baulich einfachen Konstruktion gleiche Achskennwerte an den vorderen und hinteren Radaufhängungen erzielbar.

Des Weiteren wird vorgeschlagen, dass der obere Querlenker über einen weiteren, elektromotorischen Aktuator am Modulrahmen angelenkt und zur veränderbaren Einstellung des Radsturzes und/oder gegebenenfalls des Nachlaufes verstellbar ist. Diese Maßnahme ermöglicht nach Verbau der einheitlichen Radaufhängung eine gezielte Anpassung an unterschiedliche, fahrdynamische Anforderungen von vorderer und hinterer Radaufhängung; zum Beispiel kann beim Durchfahren von Kurven durch eine Sturzverstellung des kurvenäußeren Hinterrades dessen Seitenführung erhöht werden.

In vorteilhafter Weiterbildung der Erfindung kann die Tragfeder des Federungssystems durch zumindest eine Drehstabfeder und das Dämpfungssystem durch einen Rotationsdämpfer gebildet sein, wobei zumindest der Rotationsdämpfer koaxial zur aufbauseitigen Schwenkachse des Querlenkers angeordnet ist. Daraus resultiert eine räumlich besonders gedrängte, robuste Konstruktion mit tiefer Schwerpunktlage der besagten Bauteile. Die ebenfalls koaxial zur Schenkachse des unteren Querlenkers angeordnete Drehstabfeder kann dabei bevorzugt durch den Rotationsdämpfer hindurch trieblich mit dem Querlenker gekoppelt sein.

Zur Erzielung einer aktiven Radaufhängung mit fahrdynamischer und beladungsabhängiger Anpassung der Niveaulage und zum aktiven Nick- und Wankausgleich des Kraftfahrzeuges kann an dem unteren Querlenker zumindest eine weitere Drehstabfeder als Speicherfeder angreifen, deren Federvorspannung mittels eines elektromotorisch verstellbaren Rotationsaktuators verstellbar ist. Durch die zur Tragfeder parallel geschaltete, weitere Drehstabfeder kann zum Beispiel die Belastung der Tragfeder verändert werden.

Die weitere Drehstabfeder kann baulich und räumlich besonders günstig durch zwei teleskopisch ineinander angeordnete und seriell zusammenwirkende Torsionsfedern gebildet sein, die miteinander und einerseits mit dem Rotationsaktuator und andererseits mit dem Querlenker trieblich verbunden sind und vorteilhaft am Modulrahmen angeordnet bzw. gelagert werden können. Dabei können in einer bevorzugten Anordnung in der Draufsicht gesehen der Rotationsdämpfer und die erste Drehstabfeder einerseits des Querlenkers und der Rotationsaktuator und die weitere Drehstabfeder andererseits des Querlenkers angeordnet sein.

In einer alternativen Ausgestaltung kann das Federungssystem eine am Modulrahmen einerseits und an den Radführungselementen andererseits abgestützte Schraubendruckfeder aufweisen. Die Schraubendruckfeder als Tragfeder kann dann mit der vorstehend angeführten, weiteren Drehstabfeder als Speicherfeder baulich günstig kombiniert sein.

Zudem kann das Federungs- und Dämpfungssystem durch ein Federbein mit Schraubendruckfeder und Teleskop-Stoßdämpfer gebildet sein, das an einem oberen Ausleger des Modulrahmens abgestützt und angelenkt ist. Der Ausleger kann unmittelbar an den Modulrahmen angeformt sein.

Das Federbein kann an dem besagten, oberen Querlenker angelenkt sein oder aber bevorzugt unter Entfall des oberen Querlenkers unmittelbar fest mit dem Radträger verbunden sein.

Schließlich können bei über Gelenkwellen angetriebenen Rädern des Kraftfahrzeuges die Scheibenbremsen der Betriebsbremse im Kraftfluss vor den Gelenkwellen und außerhalb der Radaufhängung angeordnet sein, so dass die auf die Radträger wirkenden Brems- und Antriebsmomente am Antriebsaggregat des Kraftfahrzeuges unmittelbar abgestützt werden.

Zwei Ausführungsbeispiele der Erfindung sind im folgenden mit weiteren Einzelheiten näher erläutert. Die schematische Zeichnung zeigt in:
- **Fig. 1**: in raumbildlicher Darstellung eine Radaufhängung für Kraftfahrzeuge mit einem oberen und einem unteren Querlenker, die an einem Modulrahmen angelenkt sind, sowie mit einem Rotationsdämpfer, einem Rotationsaktuator, einer Drehstabfeder als Tragfeder und einem Lenkaktuator,
- **Fig. 2**: die Radaufhängung nach **Fig. 1** mit zur besseren Darstellung der Aktuatoren ohne Modulrahmen,
- **Fig. 3**: ein Ersatzschaltbild der Federungs- und Dämpfungseinrichtung der Radaufhängung nach den **Fig. 1** **und** **2****,**
- **Fig. 4**: eine alternative Ausbildung einer Radaufhängung mit einheitlich verwendbarem Modulrahmen in einer Ansicht in Fahrtrichtung des Kraftfahrzeuges, mit einem Federbein als Feder- und Dämpfungssystem. und
- **Fig. 5**: die alternative Radaufhängung in einer Queransicht gemäß Pfeil X der **Fig. 4****.**

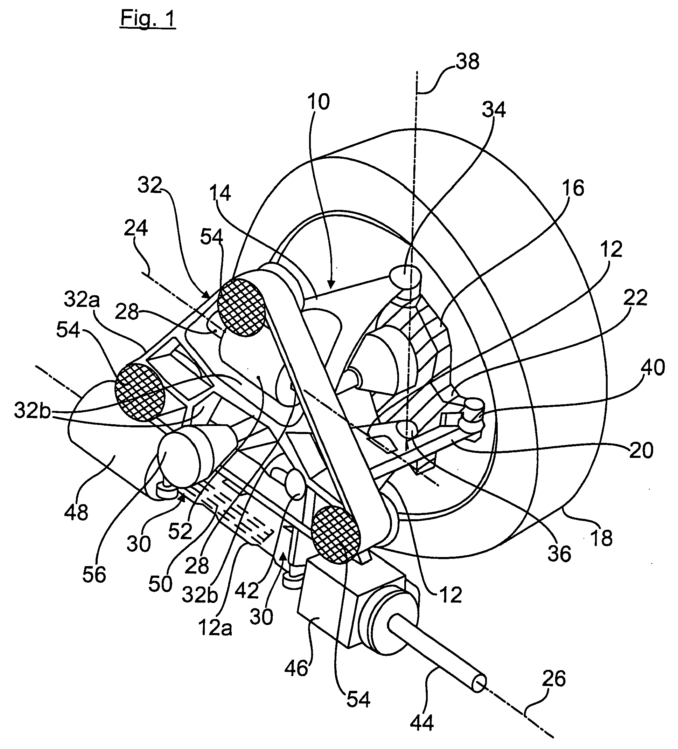

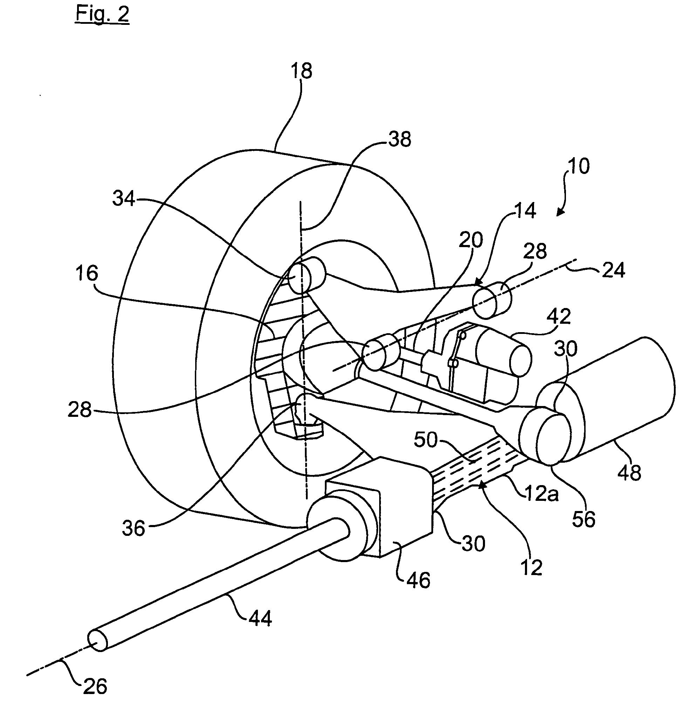

Die **Fig. 1** **und** **2** zeigen in zwei unterschiedlichen Ansichten eine Radaufhängung 10 für Kraftfahrzeuge, die an der Vorderachse und an der Hinterachse sowohl linksseitig als auch rechtsseitig einsetzbar ist.

Die Radaufhängung 10 setzt sich im wesentlichen zusammen aus einem unteren Querlenker 12, einem oberen Querlenker 14, einem Radträger 16 für ein drehbar gelagertes Rad 18 und einem dritten Lenker 20, der einerseits an einem Lenkarm 22 des Radträgers 16 angelenkt ist.

Die beiden Querlenker 12, 14 sind über jeweils eine horizontal und parallel zur Fahrzeuglängsachse ausgerichtete Schwenkachse 24, 26 über jeweils zwei Lagerstellen 28, 30 an einem Modulrahmen 32 angelenkt. Radträgerseitig sind die Querlenker 12, 14 über Kugelgelenke 34, 36 mit dem Radträger 16 unter Bildung einer lotrechten Lenkachse 38 verbunden. Die Querlenker 12, 14 sind symmetrisch so ausgeführt, dass sich bei einem Verbau der Radaufhängung 10 mit dem Modulrahmen 32 keine Änderung der Achskennwerte wie Radstand oder Radsturz einstellt.

Der dritte Lenker 20 (auch als Spurstange zu bezeichnen) ist räumlich außerhalb dieser Lenkachse 38 über ein weiteres Kugelgelenk 40 an dem Lenkarm 22 angelenkt und andererseits gelenkig mit einem Lenkaktuator 42 (vergleiche insbesondere Fig. 2) verbunden, der wiederum mit dem Modulrahmen 32 fest verschraubt oder in diesen unmittelbar integriert ist.

Über den Lenkaktuator 42 kann der dritte Lenker 20 elektromotorisch zum Steuern einer Lenkbewegung des Rades 18 oder zur Spurkorrigierung längenverstellt werden.

Der untere Querlenker 12 ist mit einer koaxial zu seiner Schwenkachse 26 angeordneten Drehstabfeder 44 (nur teilweise ersichtlich) unmittelbar trieblich verbunden. Die Drehstabfeder 44 dient als Tragfeder und ist einerseits (nicht ersichtlich) mit dem Aufbau des Kraftfahrzeuges fest verbunden. Die Verbindungen können zum Beispiel als Kerb-Steckverzahnungen ausgeführt sein.

Die Drehstabfeder 44 erstreckt sich dabei durch einen ebenfalls koaxial zur Schwenkachse 26 und unmittelbar dem Querlenker 12 benachbart angeordneten, als Stoßdämpfer dienenden Rotationsdämpfer 46, dessen Gehäuse mit dem Modulrahmen 32 fest verschraubt ist und dessen Rotorteile (nicht ersichtlich) trieblich mit dem Querlenker 12 fest verbunden sind.

An der gegenüberliegenden Seite des Querlenkers 12 ist koaxial zu dessen Schwenkachse 26 ein Rotationsaktuator 48 vorgesehen, dessen Gehäuse wiederum mit dem Modulrahmen 32 fest verschraubt ist und dessen Rotorteile (nicht ersichtlich) über eine nur in gestrichelten Linien angedeutete, zweite Drehstabfeder 50 mit dem unteren Querlenker 12 trieblich verbunden ist.

Die Drehstabfeder 50 ist dabei innerhalb eines rohrförmigen Abschnittes 12a des Querlenkers 12 angeordnet und besteht aus zwei teleskopisch ineinander verlaufenden Torsionsfedern aus zum Beispiel Titan, die innerhalb des rohrförmigen Abschnittes 12a fest miteinander verbunden sind, während deren freie Enden mit dem Rotationsaktuator 48 bzw. dem Querlenker 12 trieblich verbunden sind.

Über den Rotationsaktuator 48 kann die Vorspannung der zweiten Drehstabfeder 50 zur Veränderung der Federrate der ersten, als Tragfeder eingesetzten Drehstabfeder 44 variiert werden, zum Beispiel zur Niveauverstellung der Karosserie des Kraftfahrzeuges, zur Wank- und Nickausgleichssteuerung, etc.

An dem Modulrahmen 32 ist im Bereich der Schwenkachse 24 des oberen Querlenkers 14 ein weiterer elektromotorischer Aktuator 52 befestigt, mittels dem die Lenkachse 38 des Rades 18 zur Sturz- und/oder Nachlaufverstellung veränderbar ist. Der Aktuator 52 bildet dabei zugleich die Lagerstellen 28 des oberen Querlenkers 14. Durch entsprechende Ansteuerung des Aktuators 52 können in nicht dargestellter Weise die gegebenenfalls als verstellbare Exzenter ausgeführten Lagerstellen 28 relativ zum Modulrahmen 32 verstellt werden.

Der Modulrahmen 32 ist über drei in angeformte Lagerbuchsen 54eingesetzte, Gummi-Metall-Lager (nicht eingezeichnet) am Aufbau des Kraftfahrzeuges angeschraubt. Die Gummi-Metall-Lager bilden dabei ein gleichschenkeliges Dreieck, so dass der Modulrahmen auf Umschlag in Hochrichtung links- und rechtsseitig verbaubar ist. Die Gummi-Metall-Lager (bei 54) sind dabei konstruktiv in Fahrzeugquerrichtung und in Hochrichtung härter ausgelegt als in Fahrzeuglängsrichtung, um eine komfortable Längsfederung der Radaufhängung 10 sicherzustellen.

Der Modulrahmen 32 ist, wie aus **Fig. 1** ersichtlich ist, fachwerkartig ausgeführt, mit einem äußeren, umlaufenden Rahmen 32a und dazwischen angeordneten, aussteifenden Streben 32b. Der Modulrahmen 32 ist gewichtsgünstig als Leichtmetall-Schmiedeteil gefertigt.

Des Weiteren sind die Lagerstellen 28, 34 des oberen Querlenkers 14, die Lagerstellen 30, 36 des unteren Querlenkers 12 und die Gelenkstelle 36 am Lenker 20 mit der nicht näher dargestellten Gelenkstelle am Lenkaktuator 42 im Wesentlichen unelastisch (nicht gezielt elastisch) ausgebildet, um eine präzise Radführung und präzise steuerbare Radstellungen über die Aktuatoren 42, 46, 48, 52 zu ermöglichen. Die Lagerstellen 30 des Querlenkers 12 können anstelle am Modulrahmen 32 auch unmittelbar in den Aktuatoren 46, 48 ausgeführt sein.

Das Rad 18 ist mittels einer mit dem Antriebsaggregat des Kraftfahrzeuges trieblich verbundenen Gelenkwelle 56 verbunden, wobei die nicht dargestellte Scheibenbremse des Rades 18 im Kraftfluss vor der Gelenkwelle 56, also unmittelbar am jeweiligen Abtrieb des Antriebsaggregates positioniert ist.

Die in der **Fig. 1** gezeigte Radaufhängung 10 mit dem Modulrahmen 32 bildet eine Vormontageeinheit, die bei einem Allrad getriebenen Kraftfahrzeug mit Vierradlenkung an der Vorderachse (vordere Radaufhängungen 10) und an der Hinterachse (hintere Radaufhängungen 10) einsetzbar sind. Die links- und rechtseitigen Ausführungen können durch die symmetrische Ausführung der Bauteile einheitliche Gleichteile sein.

Der Rotationsdämpfer 46 ist bevorzugt als Generator ausgeführt, wodurch die aufzubringende Dämpfungsarbeit im Rekuperationsbetrieb als elektrische Energie dem Bordnetz des Kraftfahrzeuges wieder zuführbar ist. Der Rotationsdämpfer 48 kann aber auch kombiniert dazu oder ausschließlich als hydraulischer Dämpfer mit gegebenenfalls einer elektrorheologischen Dämpfungsflüssigkeit zur veränderbaren Einstellung der Dämpfungswirkung ausgeführt sein.

Der Rotationsaktuator 48 ist ebenfalls neben der elektromotorisch gesteuerten Veränderung der Vorspannung der zweiten Drehstabfeder 50 als Generator schaltbar, um gegebenenfalls zusätzliche Dämpfungsarbeit im Rekuperationsbetrieb zu leisten bzw. Energie zurück zu speichern.

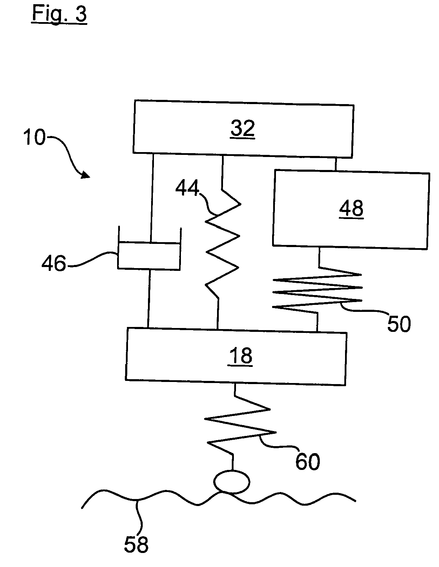

Die **Fig. 3** zeigt das Prinzipschaltbild der Federungs- und Dämpfungseinrichtung der in den **Fig. 1** **und** **2** gezeigten Radaufhängung 10. Funktionell gleiche Teile sind mit gleichen Bezugszeichen versehen.

Wie ersichtlich ist, sind zwischen dem Modulrahmen 32 und dem Rad 18 die Drehstabfeder 44 als Tragfeder und die Stellfeder- bzw. zweite Drehstabfeder 50 parallel angeordnet, wobei die Vorspannung der zweiten Drehstabfeder 50 mittels des Rotationsaktuators 48 zur Niveauverstellung und zum Wank- und Nickausgleich des Kraftfahrzeuges entsprechend der ersten Drehstabfeder 44 überlagerbar ist. Der Einfachheit halber sind die Federn 44, 50 als Schraubendruckfedern dargestellt.

Der ebenfalls parallel geschaltete Rotationsdämpfer 46 (wiederum vereinfacht dargestellt) wirkt in bekannter Weise zur Dämpfung der Aufbauschwingungen, die über Unebenheiten der Fahrbahn 58 und über den Elastizitätsfaktor 60 des Reifens des Rades 18 angeregt werden. Wie vorbeschrieben kann gegebenenfalls auch der Rotationsaktuator 48 eine definierte Dämpfungswirkung ausüben.

Die Aktuatoren 48, 52 und der Lenkaktuator 42 werden zur Einstellung der achsspezifischen Kennwerte wie Spur, Sturz, Konstruktionslage (Niveauhöhe) der Radaufhängung 10 im feed back Verfahren über ein zentrales, elektronisches Steuergerät (nicht dargestellt) entsprechend gesteuert. Die Grundeinstellung erfolgt dabei auf einem Fahrwerks-Prüfstand, in dem die Achskennwerte und die Radstellungen vermessen und die jeweiligen Grundeinstellungen angefahren und gespeichert werden.

Im Fahrbetrieb des Kraftfahrzeuges können dann nach fahrdynamischen Parametern, nach Beladung, nach fahrstabilitätsbezogenen Kriterien diese Grundwerte entsprechend verändert und dynamisch und/oder statisch angepasst werden.

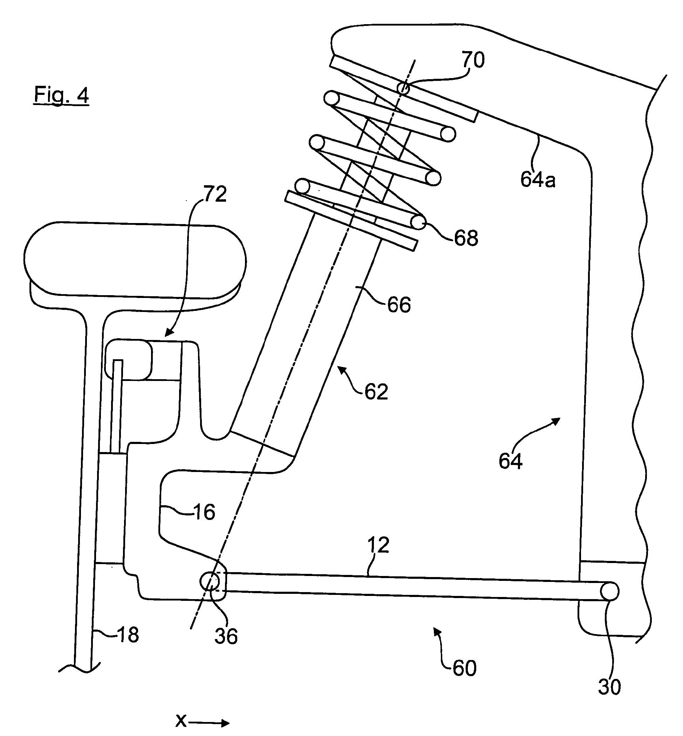

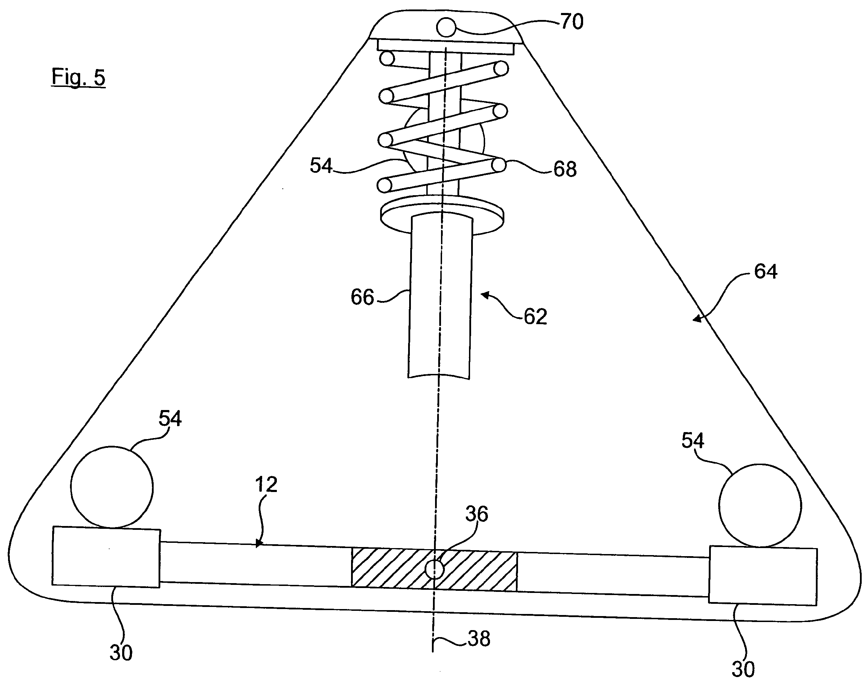

Die **Fig. 4** **und** **5** zeigen ein alternatives Ausführungsbeispiel der Erfindung, das nur soweit dargestellt ist, als es sich wesentlich von der Ausführung gemäß den **Fig. 1** **und** **2** unterscheidet. Funktionell gleiche Teile sind mit gleichen Bezugszeichen versehen.

Abweichend zu der vorstehend beschriebenen Radaufhängung sind bei der Radaufhängung 60 gemäß den **Fig. 4** **und** **5** das Federungs- und Dämpfungssystem durch ein Federbein 62 gebildet, das einerseits fest mit dem Radträger 16 verbunden ist und andererseits über ein nur angedeutetes Dämpferlager 70 gelenkig an einem Ausleger 64a des Modulrahmens 64 abgestützt ist. Der Ausleger 64a ist an den Modulrahmen 64 unmittelbar angeformt.

Das Federbein setzt sich aus einem Teleskopstoßdämpfer 66 und einer als Tragfeder wirkenden Schraubendruckfeder 68 zusammen. Die Lenkachse 38 des Radträgers 16 bzw. des Rades 18 verläuft in der Seitenansicht (**Fig. 4**) gesehen schräg von unten nach oben nach innen, in der Queransicht (**Fig. 5**) jedoch senkrecht, so dass ein Verbau der Radaufhängung 60 mit dem Modulrahmen 64 links- und rechtsseitig des Kraftfahrzeuges gegeben ist.

Es sei bemerkt, dass soweit nicht beschrieben die nur teilweise dargestellte Radaufhängung 60 analog der Radaufhängung 10 ausgeführt ist, also mit dem entsprechenden Lenkaktuator 42, dessen spurführender Lenker 20 am Radträger 16 angelenkt ist und mit dem analog ausgeführten, symmetrischen Modulrahmen 32.

Am unteren Querlenker 12 kann wie vorbeschrieben die Drehstabfeder 50 als Stellfeder mit dem Rotationsaktuator 48 vorgesehen sein, um eine aktive Radaufhängung mit Niveauverstellung und Nick- und Wankausgleich zu schaffen.

Ferner kann bei der beschriebenen Verwendung des Federbeines 62 die Betriebsbremse bzw. Scheibenbremse 72 des Kraftfahrzeuges in bekannter Weise auch am Radträger 16 angeordnet sein, so dass die auftretenden Bremsmomente über das Federbein abgestützt werden.

Abweichend zur Ausgestaltung der Radaufhängung 60 gemäß den **Fig. 4** und 5 können auch beide Querlenker 12 und 14 vorgesehen sein, wobei das Federbein 62 dann am oberen oder am unteren Querlenker 12, 14 angelenkt ist. Die Lenkachse 38 ist dann analog zu den **Fig. 1** **und** **2** durch die äußeren Kugelgelenke 34, 36 gebildet und zur Einstellung eines unterschiedlichen Radsturzes über den Aktuator 52 entsprechend verstellbar.

## Patentansprüche

1. Kraftfahrzeug mit einer Radaufhängung (10), die wenigstens ein Radführungselement (12, 14; 62) aufweist, das einerseits an einem mit dem Aufbau des Kraftfahrzeuges verbindbaren Hilfsrahmen und andererseits an einem Radträger (16) mittelbar oder unmittelbar angelenkt ist, und mit einem Federungs- und Dämpfungssystem sowie mit einem Lenksystem für das Rad, wobei der Hilfsrahmen als je Radaufhängung (10; 60) autarker, eine Vormontageeinheit ausbildender, links- und/oder rechtsseitig sowie an einer Vorder- und/oder Hinterachse einsetzbarer Modulrahmen (32; 64) ausgeführt ist, an dem das wenigstens eine Radführungselement (12, 14, 20; 62) mittelbar oder unmittelbar angelenkt, das Federungs- und Dämpfungssystem (44, 46; 62) wenigstens zum Teil mittelbar oder unmittelbar abgestützt und wenigstens ein Aktuator (42, 48, 52) zur Betätigung des Federungs- und Dämpfungssystems und/oder des Lenksystems und damit zur Einstellung vorgegebener radspezifischer Radführungs- und/oder Lenkparameter mittelbar oder unmittelbar angeordnet sind, **dadurch gekennzeichnet, dass** der Modulrahmen (32; 64) über mehrere passive oder aktive, gummielastische Entkopplungselemente (bei 54), insbesondere über Gummi-Metall-Lager, an dem Aufbau befestigt ist, wobei die Entkopplungselemente (bei 54) in Fahrzeuglängsrichtung weicher als in Hochrichtung und in Querrichtung ausgelegt sind.

2. Kraftfahrzeug nach Anspruch 1, **dadurch gekennzeichnet, dass** der Modulrahmen (32; 64) über zwei untere und ein oberes passives oder aktives, gummielastisches Entkopplungselement (bei 54), bevorzugt ein Gummi-Metall-Lager, mit dem Aufbau verbunden ist, wobei die Entkopplungselemente (bei 54) bevorzugt im Wesentlichen ein gleichschenkeliges Dreieck bilden.

3. Kraftfahrzeug nach einem der vorhergehenden Ansprüche, **dadurch gekennzeichnet, dass** der Modulrahmen (32; 64) mit den Radführungselementen (12, 14; 62) derart symmetrisch ausgeführt ist, dass er, vorzugsweise bei gleichen Achskenndaten und bei gleichem Radstandswert beliebig verbaubar ist, insbesondere auf Umschlag linksseitig und rechtsseitig des Kraftfahrzeuges und/oder vorderachsseitig und hinterachsseitig verbaubar ist.

4. Kraftfahrzeug nach einem der vorhergehenden Ansprüche, **dadurch gekennzeichnet, dass** der Modulrahmen (32; 64) fachwerkartig mit einem äußeren Rahmen (32a) und dazwischen liegenden Streben (32b) ausgeführt ist.

5. Kraftfahrzeug nach einem der vorhergehenden Ansprüche, **dadurch gekennzeichnet, dass** der Modulrahmen (32; 64) aus Leichtmetall im Guss- oder Schmiedeverfahren hergestellt ist.

6. Kraftfahrzeug nach einem der vorhergehenden Ansprüche, **dadurch gekennzeichnet, dass** das untere Radführungselement ein unterer, in der Draufsicht gesehen bevorzugt symmetrischer Querlenker (12) ist, dessen Schwenkachse (26) im wesentlichen horizontal und parallel zur Längsmittelachse des Kraftfahrzeuges ausgerichtet ist.

7. Kraftfahrzeug nach einem der vorhergehenden Ansprüche, **dadurch gekennzeichnet, dass** das obere Radführungselement ein oberer, in der Draufsicht gesehen bevorzugt symmetrischer Querlenker (14) ist, dessen Schwenkachse (24) im wesentlichen horizontal und parallel zur Längsmittelachse des Kraftfahrzeuges verläuft.

8. Kraftfahrzeug nach Anspruch 6 und 7, **dadurch gekennzeichnet, dass** die durch die Anlenkung des Radträgers (16) an den Querlenkern (12, 14) über Kugelgelenke (34, 36) gebildete Lenkachse (38) im Wesentlichen lotrecht verläuft.

9. Kraftfahrzeug nach Anspruch 7 oder 8, **dadurch gekennzeichnet, dass** der obere Querlenker (14) über einen elektromotorischen Aktuator (52) am Modulrahmen (32; 64) angelenkt und zur veränderbaren Einstellung von Radführungsparametern, insbesondere des Radsturzes und/oder des Nachlaufes, verstellbar ist.

10. Kraftfahrzeug nach einem der vorhergehenden Ansprüche, **dadurch gekennzeichnet, dass** am Modulrahmen (32; 64) ein mittels eines Lenkaktuators (42) verstellbarer spurführender Lenker (20) angeordnet ist.

11. Kraftfahrzeug nach Anspruch 10, **dadurch gekennzeichnet, dass** der mit dem spurführenden Lenker (20) zusammenwirkende Lenkaktuator (42) in den Modulrahmen (32; 64) integriert ist.

12. Kraftfahrzeug nach einem der vorhergehenden Ansprüche, **dadurch gekennzeichnet, dass** eine Tragfeder des Federungssystems durch zumindest eine Drehstabfeder (44) und das Dämpfungssystem durch einen Rotationsdämpfer (46) gebildet ist, wobei bevorzugt vorgesehen ist, dass zumindest der Rotationsdämpfer (46) koaxial zur aufbauseitigen Schwenkachse (26) eines unteren Querlenkers (12) angeordnet ist.

13. Kraftfahrzeug nach Anspruch 12, **dadurch gekennzeichnet, dass** die ebenfalls koaxial zur Schwenkachse des unteren Querlenkers (12) angeordnete Drehstabfeder (44) durch den Rotationsdämpfer (46) hindurch trieblich mit dem unteren Querlenker (12) gekoppelt ist.

14. Kraftfahrzeug nach einem der vorhergehenden Ansprüche, **dadurch gekennzeichnet, dass** das Federungs- und Dämpfungssystem (44; 62) eine Tragfeder (44; 68) aufweist, der eine parallel geschaltete und durch einen Aktuator (48) in ihrer Federvorspannung veränderliche Stellfeder (50) zugeordnet ist.

15. Kraftfahrzeug nach einem der Ansprüche 12 bis 14, **dadurch gekennzeichnet, dass** an dem unteren Querlenker (12) zumindest eine weitere Drehstabfeder (50) als Stellfeder angreift, deren Federvorspannung mittels eines elektromotorisch verstellbaren Rotationsaktuators (48) verstellbar ist.

16. Kraftfahrzeug nach Anspruch 15, **dadurch gekennzeichnet, dass** die weitere Drehstabfeder (50) durch zwei teleskopisch ineinander angeordnete und seriell zusammenwirkende Torsionsfedern gebildet ist, die miteinander und einerseits mit dem Rotationsaktuator (48) und andererseits mit dem unteren Querlenker (12) trieblich verbunden sind.

17. Kraftfahrzeug nach Anspruch 15 oder 16, **dadurch gekennzeichnet, dass** in der Draufsicht gesehen der Rotationsdämpfer (46) und die erste Drehstabfeder (50) einerseits des Querlenkers (12) und der Rotationsaktuator (48) und die weitere Drehstabfeder (50) andererseits des Querlenkers (12) angeordnet sind.

18. Kraftfahrzeug nach einem der vorhergehenden Ansprüche, **dadurch gekennzeichnet, dass** das Federungssystem eine am Modulrahmen (64) einerseits und an den Radführungselementen (16) andererseits abgestützte Schraubendruckfeder (68) aufweist.

19. Kraftfahrzeug nach Anspruch 18, **dadurch gekennzeichnet, dass** das Federungs- und Dämpfungssystem durch ein Federbein (62) mit Schraubendruckfeder (68) und Teleskop-Stoßdämpfer (66) gebildet ist, das an einem oberen Ausleger (64a) des Modulrahmens (64) abgestützt und angelenkt ist.

20. Kraftfahrzeug nach Anspruch 19, **dadurch gekennzeichnet, dass** das Federbein (62) unter Entfall des oberen Querlenkers (14) unmittelbar fest mit dem Radträger (16) verbunden ist.

21. Kraftfahrzeug nach einem der vorhergehenden Ansprüche, **dadurch gekennzeichnet, dass** bei über Gelenkwellen (56) angetriebenen Rädern (18) des Kraftfahrzeuges die Scheibenbremsen der Betriebsbremse im Kraftfluss vor den Gelenkwellen (56) und außerhalb der Radaufhängung (10) angeordnet sind.

## Claims

1. A motor vehicle with a wheel suspension (10) which has at least one wheel-guiding member (12, 14; 62), which on the one hand is directly or indirectly pivoted on an auxiliary frame which can be connected to the structure of the motor vehicle, and on the other on a wheel carrier (16), and with a suspension and damping system as well as with a steering system for the wheel, the auxiliary frame being configured as an independent module frame (32; 64) per wheel suspension (10; 60), forming a pre-assembly unit, installable on the left and/or right side as well as on a front and/or rear axis, on which the at least one wheel-guiding member (12, 14, 20; 62) is directly or indirectly pivoted, the suspension and damping system (44, 46; 62) at least in part directly or indirectly supported and at least one actuator (42, 48, 52) for activating the suspension and damping system and/or the steering system and therefore for setting predetermined wheel-specific wheel-guiding and/or steering parameters are directly or indirectly arranged, **characterised in that** the module frame (32; 64) is fastened to the structure via a plurality of passive or active rubber-elastic decoupling members (at 54), in particular via rubber-metal bearings, the decoupling members (at 54) being constructed as softer in longitudinal direction of the motor vehicle than in vertical direction and in transverse direction.

2. The motor vehicle according to claim 1, **characterised in that** the module frame (32; 64) is connected to the structure via two lower and one upper passive or active rubber-elastic decoupling member (at 54), preferably a rubber-metal bearing, the decoupling members (at 54) preferably substantially forming an isosceles triangle.

3. The motor vehicle according to one of the previous claims, **characterised in that** the module frame (32; 64) with the wheel-guiding members (12, 14; 62) is configured symmetrically, such that it is preferably installable in any manner with identical axle characteristics and with identical wheelbase value, in particular installable laterally on the left side and on the right side of the motor vehicle and/or on the front axle side and on the rear axle side.

4. The motor vehicle according to one of the previous claims, **characterised in that** the module frame (32; 64) is configured in the manner of a framework structure with an outside frame (32a) and intermediate struts (32b).

5. The motor vehicle according to one of the previous claims, **characterised in that** the module frame (32; 64) is produced out of light metal in a casting or forging process.

6. The motor vehicle according to one of the previous claims, **characterised in that** seen in the plan view the lower wheel-guiding member is a lower, preferably symmetrical, transverse control arm (12), of which the pivot axis (26) is configured substantially horizontal and parallel to the longitudinal centre axis of the motor vehicle.

7. The motor vehicle according to one of the previous claims, **characterised in that** seen in the plan view the upper wheel-guiding member is an upper, preferably symmetrical, transverse control arm (14), of which the pivot axis (24) runs substantially horizontal and parallel to the longitudinal centre axis of the motor vehicle.

8. The motor vehicle according to claim 6 or 7, **characterised in that** the steering axle (38) formed by the pivoting of the wheel carrier (16) on the transverse control arms (12, 14) via ball joints (34, 36) runs substantially vertical.

9. The motor vehicle according to claim 7 or 8, **characterised in that** the upper transverse control arm (14) is pivoted on the module frame (32; 64) via an electric motor-driven actuator (52) and displaceable for the modifiable setting of wheel-guiding parameters, in particular of the wheel camber and/or the caster.

10. The motor vehicle according to one of the previous claims, **characterised in that** on the module frame (32; 64) a track-guiding steering part (20) is arranged as displaceable by means of a steering actuator (42).

11. The motor vehicle according to claim 10, **characterised in that** the steering actuator (42) cooperating with the track-guiding steering part (20) is integrated into the module frame (32; 64).

12. The motor vehicle according to one of the previous claims, **characterised in that** a suspension spring of the suspension system is formed by at least one torsion bar (44) and the damping system by a rotary damper (46), it being preferably provided that at least the rotary damper (46) is arranged coaxially to the pivot axis (26) on the structure side of a lower transverse control arm (12).

13. The motor vehicle according to claim 12, **characterised in that** the torsion bar (44) likewise arranged coaxially to the pivot axis of the lower transverse control arm (12) is drivingly coupled to the lower transverse control arm (12) through the rotary damper (46).

14. The motor vehicle according to one of the previous claims, **characterised in that** the suspension and damping system (44; 62) has a suspension spring (44; 68) to which is assigned a positioning spring (50) which is connected as in parallel and variable in its spring pre-tension by means of an actuator (48).

15. The motor vehicle according to one of claims 12 to 14, **characterised in that** on the lower transverse control arm (12) at least one additional torsion bar (50) engages as a positioning spring of which the spring pre-tension is displaceable by means of an electric motor-driven displaceable rotary actuator (48).

16. The motor vehicle according to claim 15, **characterised in that** the additional torsion bar (50) is formed by two serially cooperating torsion springs arranged telescopically in one another, which are drivingly connected to each other, and, on the one hand, to the rotary actuator (48) and, on the other, to the lower transverse control arm (12).

17. The motor vehicle according to claim 15 or 16, **characterised in that** seen in the plan view the rotary damper (46) and the first torsion bar (50) are arranged on the one side of the transverse control arm (12) and the rotary actuator (48), and the additional torsion bar (50) on the other side of the transverse control arm (12).

18. The motor vehicle according to one of the previous claims, **characterised in that** the suspension system has a compression spring (68) supported on the one hand on the module frame (64) and on the other on the wheel-guiding members (16).

19. The motor vehicle according to claim 18, **characterised in that** the suspension and damping system is formed by a suspension strut (62) with compression spring (68) and telescope shock absorber (66), which is supported and pivoted on an upper extension arm (64a) of the module frame (64).

20. The vehicle according to claim 19, **characterised in that** the suspension strut (62) is directly fixedly connected to the wheel carrier (16) when the upper transverse control arm (14) is removed.

21. The vehicle according to one of the previous claims, **characterised in that** with wheels (18) of the motor vehicle driven by drive shafts (56) the disc brakes of the service brake are arranged in the force flow in front of the drive shafts (56) and outside the wheel suspension (10).

## Revendications

1. Véhicule automobile avec une suspension de roue (10), qui comporte au moins un élément de guidage de roue (12, 14; 62) qui est articulé directement ou indirectement d'une part sur un faux-châssis pouvant être relié à la carrosserie du véhicule automobile et d'autre part sur un support de roue (16), et avec un système de suspension et d'amortissement ainsi qu'avec un système de direction pour la roue, le faux-châssis étant réalisé pour chaque suspension de roue (10; 60) comme un châssis modulaire (32, 64) autonome, formant une unité prémontée, qui peut être placé du côté gauche et/ou du côté droit ainsi que sur un essieu avant et/ou sur un essieu arrière et sur lequel l'au moins un élément de guidage de roue (12, 14, 20; 62) est articulé directement ou indirectement, le système de suspension et d'amortissement (44, 46; 62) est appuyé directement ou indirectement au moins en partie et au moins un actionneur (42, 48, 52) est agencé directement ou indirectement pour l'actionnement du système de suspension et d'amortissement et/ou du système de direction et donc pour le réglage de paramètres de guidage de roue et/ou de direction prédéterminés spécifiques à une roue, **caractérisé en ce que** le châssis modulaire (32; 64) est fixé à la carrosserie par l'intermédiaire de plusieurs éléments de découplage élastiques, passifs ou actifs, (en 54), notamment de paliers caoutchouc-métal, les éléments de découplage (en 54) étant conçus plus souples dans la direction longitudinale de véhicule que dans la direction verticale et dans la direction transversale.

2. Véhicule automobile selon la revendication 1, **caractérisé en ce que** le châssis modulaire (32; 64) est relié à la carrosserie par l'intermédiaire d'éléments de découplage (en 54), deux inférieurs et un supérieur, passifs ou actifs, élastiques, de préférence des paliers caoutchouc-métal, les éléments de découplage (en 54) formant de préférence globalement un triangle isocèle.

3. Véhicule automobile selon l'une des revendications précédentes, **caractérisé en ce que** le châssis modulaire (32; 64) avec les éléments de guidage de roue (12, 14; 62) est réalisé symétrique de telle sorte que, pour des données caractéristiques d'essieu identiques et pour une valeur d'empattement identique, il peut être monté de manière quelconque, notamment côté gauche et côté droit du véhicule automobile et/ou sur l'essieu avant et sur l'essieu arrière.

4. Véhicule automobile selon l'une des revendications précédentes, **caractérisé en ce que** le châssis modulaire (32; 64) est réalisé avec un cadre extérieur (32a) et avec des traverses (32b) placées entre les éléments de ce cadre.

5. Véhicule automobile selon l'une des revendications précédentes, **caractérisé en ce que** le châssis modulaire (32; 64) est fabriqué en métal léger avec un procédé de moulage ou de forgeage.

6. Véhicule automobile selon l'une des revendications précédentes, **caractérisé en ce que** l'élément de guidage de roue inférieur est un bras transversal (12) inférieur, de préférence symétrique en vue de dessus, dont l'axe de pivotement (26) est orienté sensiblement horizontalement et parallèlement à l'axe médian longitudinal du véhicule automobile.

7. Véhicule automobile selon l'une des revendications précédentes, **caractérisé en ce que** l'élément de guidage de roue supérieur est un bras transversal (14) supérieur, de préférence symétrique en vue de dessus, dont l'axe de pivotement (24) s'étend sensiblement horizontalement et parallèlement à l'axe médian longitudinal du véhicule automobile.

8. Véhicule automobile selon les revendications 6 et 7, **caractérisé en ce que** l'essieu orientable (38) formé par l'articulation du support de roue (16) sur les bras transversaux (12, 14) par l'intermédiaire de rotules (34, 36) s'étend sensiblement verticalement.

9. Véhicule automobile selon la revendication 7 ou 8, **caractérisé en ce que** le bras transversal supérieur (14) est articulé sur le châssis modulaire (32; 64) par l'intermédiaire d'un actionneur électromoteur (52) et est réglable pour modifier le réglage de paramètres de guidage de roue, notamment le carrossage et/ou la chasse.

10. Véhicule automobile selon l'une des revendications précédentes, **caractérisé en ce qu'**un bras (20) assurant l'alignement et réglable au moyen d'un actionneur de direction (42) est agencé sur le châssis modulaire (32; 64).

11. Véhicule automobile selon la revendication 10, **caractérisé en ce que** l'actionneur de direction (42) coopérant avec le bras (20) assurant l'alignement est intégré dans le châssis modulaire (32; 64).

12. Véhicule automobile selon l'une des revendications précédentes, **caractérisé en ce qu'**un ressort porteur du système de suspension est formé par au moins un ressort à barre de torsion (44) et **en ce que** le système d'amortissement est formé par un amortisseur rotatif (46), étant prévu de préférence qu'au moins l'amortisseur rotatif (46) est agencé de manière coaxiale par rapport à l'axe de pivotement (26), côté carrosserie, d'un bras transversal inférieur (12).

13. Véhicule automobile selon la revendication 12, **caractérisé en ce que** le ressort à barre de torsion (44) également agencé de manière coaxiale par rapport à l'axe de pivotement du bras transversal inférieur (12) est couplé mécaniquement au bras transversal inférieur (12) à travers l'amortisseur rotatif (46).

14. Véhicule automobile selon l'une des revendications précédentes, **caractérisé en ce que** le système de suspension et d'amortissement (44; 62) comporte un ressort porteur (44; 68) auquel est associé un ressort d'ajustage (50) qui est branché en parallèle et dont la précontrainte de ressort peut être modifiée par un actionneur (48).

15. Véhicule automobile selon l'une des revendications 12 à 14, **caractérisé en ce qu'**au moins un autre ressort à barre de torsion (50) agit comme ressort d'ajustage sur le bras transversal inférieur (12) et **en ce que** sa précontrainte de ressort peut être réglée au moyen d'un actionneur rotatif (48) réglable par moteur électrique.

16. Véhicule automobile selon la revendication 15, **caractérisé en ce que** l'autre ressort à barre de torsion (50) est formé par deux ressorts de torsion qui sont agencés de manière télescopique l'un dans l'autre, qui coopèrent en série et qui sont reliés mécaniquement d'une part à l'actionneur rotatif (48) et d'autre part au bras transversal inférieur (12).

17. Véhicule automobile selon la revendication 15 ou 16, **caractérisé en ce que**, vu de dessus, l'amortisseur rotatif (46) et le premier ressort à barre de torsion (50) sont agencés d'un côté du bras transversal inférieur (12) et l'actionneur rotatif (48) et l'autre ressort à barre de torsion (50) sont agencés de l'autre côté du bras transversal inférieur (12).

18. Véhicule automobile selon l'une des revendications précédentes, **caractérisé en ce que** le système de suspension comporte un ressort cylindrique de compression (68) appuyé d'une part sur le châssis modulaire (64) et d'autre part sur les éléments de guidage de roue (16).

19. Véhicule automobile selon la revendication 18, **caractérisé en ce que** le système de suspension et d'amortissement est formé par une jambe de force à ressort (62) qui a un ressort cylindrique de compression (68) et un amortisseur de choc télescopique (66) et qui est appuyée et articulée sur un bras supérieur (64a) du châssis modulaire (64).

20. Véhicule automobile selon la revendication 19, **caractérisé en ce que** la jambe de force à ressort (62) est fixée directement au support de roue (16) en supprimant le bras transversal supérieur (14).

21. Véhicule automobile selon l'une des revendications précédentes, **caractérisé en ce que**, si les roues (18) du véhicule automobile sont entraînées par l'intermédiaire d'arbres articulés (56), les freins à disques des freins de service sont agencés, vus dans le flux de force, avant les arbres articulés (56) et en dehors de la suspension de roue (10).
